# EUROPEAN PATENT SPECIFICATION

(11) **EP 3 544 279 B1**
(45) Date of publication and mention of the grant of the patent: **25.09.2024**
(21) Application number: 19163392.4
(22) Date of filing: 18.03.2019
(51) Int. Cl.: H04N 1/00, H04N 1/32, H04N 1/387

(54) **IMAGE PROCESSING APPARATUS**
BILDVERARBEITUNGSVORRICHTUNG
APPAREIL DE TRAITEMENT D'IMAGES

(30) Priority: 23.03.2018 JP 2018057067
(43) Date of publication of application: 25.09.2019
(73) Proprietor: Kyocera Document Solutions Inc., Osaka-shi, Osaka 540-8585 (JP)
(72) Inventor: NISHINO, Tetsuya, Chuo-ku, Osaka 540-8585 (JP)
(74) Representative: Sommer, Andrea

(56) References cited:
- EP-A1- 1 148 705
- JP-A- 2007 129 424
- JP-A- 2007 259 263
- US-A1- 2009 051 950
- US-A1- 2015 261 489
- ANONYMOUS: "How to Print Multiple Slides on One Paper in PowerPoint 2010 | PPT Bird - I Saw, I Learned, I Share ...", 1 June 2012 (2012-06-01), XP055605818, Retrieved from the Internet <URL:http://ppt-bird.blogspot.com/2012/06/print-multiple-slides-on-one-paper.html> [retrieved on 20190716]

## Description

### BACKGROUND

Unless otherwise indicated herein, the description in this section is not prior art to the claims in this application and is not admitted to be prior art by inclusion in this section.

A certain image processing apparatus divides a stamp into a plurality of divided parts before combining a plurality of raw images, and composes the plurality of divided parts of the stamp on the respective plurality of raw images in an N-up print. This ensures the composed stamp over the plurality of raw images in a page image after combining (hereinafter, referred to as combined image).
Anonymous: "How to Print Multiple Slides on One Paper in PowerPoint 1010 | PPT Bird - I Saw, I Learned, I Share..."1 June 2012, Retrieved from the Internet: URL:http://ppt-bird.blogspot.com/2012/06/print-multiple-slides-on-one-paper.html, discloses printing of a common page number or a common date on one page showing multiple slides.
JP 2007 129424 A discloses a composite image generation program, apparatus and corresponding method. D2 discloses 2up printing and stamp merging. According to a first processing mode, an existing stamp is divided into a plurality of pages. According to another processing mode, a reduction of an existing stamp is performed so that all characters fit in the image to be printed.
EP 1 148 705 A1 discloses a digital copying apparatus comprising a scanner unit, a processing unit, a printer unit and a control unit. The control unit defines the image orientation of the image on each document automatically on the basis of the orientation of the document and an assumption that the reading direction of the image on the document is always situated in a fixed predetermined direction with respect to the scanner unit. When the operator introduces original documents into this apparatus allowing for the said fixed direction, then in by far the majority of cases processing operations related to the image orientation automatically take place correctly. As a result, many settings which normally have to be input to define a copy job are superfluous. US 2015/0261489 A1 discloses an information processing apparatus capable of reducing variances of rendering engines of various manufactures. Advantages of a sheet mode compared to a page mode are described when adding a stamp (called a "stump") to a combined image. According to the disclosure, it is easier to add a stamp to a combined image in a sheet mode. The stamp is a symbol. No further details about stamp generation are described.
US 2009/0051950 A1 discloses an image forming apparatus which combines a character string image with an image of image data and forms a combined image, including: a display section to display the character string image; and a control section to generate the character string image to be combined to the image and to display the character string image on the display section, wherein the control section controls the display section to display the character string generated with same font data as font data used for forming the character string image of the combined image on a sheet.
JP 2007259263 A is directed to an image processing method, an image processing apparatus, a program and a storage medium. The problem to be solved is to enable image data, which are required to be printed out, to be freely selected from a lot of image data in which images of vertical composition and horizontal composition are intermingled, without caring for photographing directions, and furthermore to realize an Nin1 layout at printing in a state that photographing directions are set in order. When two or more selected image data are subjected to Nin1 printing, the image data are automatically rearranged grouping them into ones of vertical composition and the others of horizontal composition on the basis of orientation information as to the image data. When an insufficient space (or a superfluous space) occurs in pages which are grouped by the compositions of the images, a warning message is displayed. Furthermore, a function to put the dates of the images together is provided in a case that the time stamps of images in the same page coincide with each other.

### SUMMARY

It is the object of the present invention to provide an improved image processing apparatus which allows for including stamps in a combined image in a technically elegant and thus simple, flexible and user-friendly way.
The object is solved by the subject matter of independent claim 1. Dependent claims are directed to advantageous embodiments.

### BRIEF DESCRIPTION OF THE DRAWINGS

FIG. 1 illustrates a block diagram illustrating a configuration of an image processing apparatus according to Example 1 of the disclosure;
FIG. 2 illustrates a behavior of the image processing apparatus according to Example 1 when a copy job is executed;
FIG. 3 illustrates one example of a stamp image and a composite image of a combined image and the stamp image when the number of combinations N is two, a document size is A4, and an orientation of the combined image is a landscape;
FIG. 4 illustrates one example of a stamp image and a composite image of a combined image and the stamp image when the number of combinations N is four, the document size is A4, and the orientation of the combined image is the landscape;
FIG. 5 illustrates one example of a stamp image and a composite image of a combined image and the stamp image when the number of combinations N is two, the document size is A4, and the orientation of the combined image is a portrait;
FIG. 6 illustrates one example of a stamp image and a composite image of a combined image and the stamp image when the number of combinations N is four, the document size is A4, and the orientation of the combined image is the portrait; and
FIG. 7 illustrates a behavior of the image processing apparatus according to Example 1 when a print job is executed.

### DETAILED DESCRIPTION

### Example

The Examples described herein are not meant to be limiting.

The following describes examples based on the drawings.

### Example 1

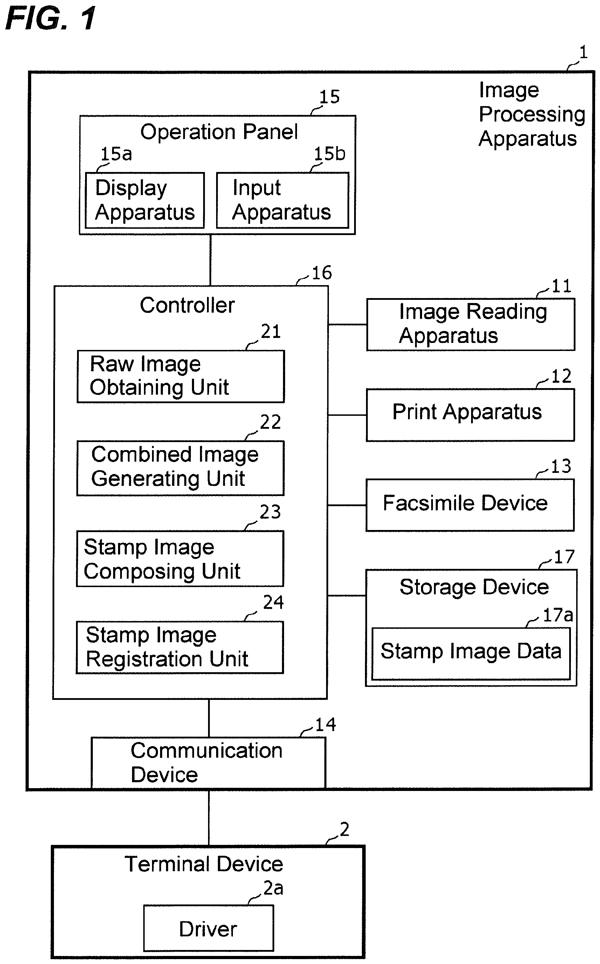

FIG. 1 illustrates a configuration of an image processing apparatus according to Example 1 of the disclosure. An image processing apparatus 1 illustrated in FIG. 1 is an image forming apparatus, such as a multi-functional peripheral. The image processing apparatus 1 illustrated in FIG. 1 includes, for example, an image reading apparatus 11, a print apparatus 12, a facsimile device 13, a communication device 14, an operation panel 15, a controller 16, and a storage device 17.

The image reading apparatus 11 is an internal unit that optically reads a document image from a document placed on a platen glass and a document fed by an automatic document feeder with a specified resolution to generate image data of the document image.

The print apparatus 12 is an internal unit that prints, for example, the document image and a combined image.

The facsimile device 13 is an internal unit that transmits the image data obtained by a scan as a facsimile signal, and receives a facsimile signal to generate the image data. The communication device 14 is, for example, a network interface and a short-range communication interface, and is an internal unit that performs a data communication with a terminal device and a server, which are not illustrated.

The operation panel 15 is an internal unit that is arranged on a housing top surface side of this image reading apparatus, and includes a display apparatus 15a that displays an operation screen for a user and an input apparatus 15b that accepts user's operations. The display apparatus 15a is, for example, a liquid crystal display. The input apparatus 15b is, for example, a hardware key and a touch panel that achieves a software key together with the display apparatus 15a.

The controller 16 includes, for example, a computer including, for example, a Central Processing Unit (CPU), a Read Only Memory (ROM), and a Random Access Memory (RAM), and an Application Specific Integrated Circuit (ASIC). The controller 16 behaves as various kinds of processing units. That is, the controller 16 loads a program stored in the ROM and the storage device 17 into the RAM, and executes the program in the CPU to behave as the various kinds of processing units by software, or use, for example, the ASIC to behave as the various kinds of processing units by hardware. The controller 16 controls the internal units to execute various kinds of process.

The storage device 17 is a non-volatile storage device, such as a flash memory, and stores data and programs. The storage device 17 stores, for example, stamp image data 17a.

The controller 16 behaves as a raw image obtaining unit 21, a combined image generating unit 22, a stamp image composing unit 23, and a stamp image registration unit 24.

The raw image obtaining unit 21 obtains N raw images (a plurality of document page images) for generating an N-up image. When a copy job is executed, the image reading apparatus 11 reads the raw images from the documents, and the raw image obtaining unit 21 obtains the raw images from the image reading apparatus 11. When a print job is executed, the communication device 14 communicates with a driver 2a in an external terminal device 2, and the raw image obtaining unit 21 obtains the raw images from the driver 2a by using the communication device 14.

The combined image generating unit 22 generates a combined image from the obtained raw images.

The stamp image composing unit 23 selects a stamp image adapted for a combined image generating condition (such as number of combinations N and document size) from a plurality of stamp images having mutually different layouts of stamps to compose the selected stamp image on the combined image. This plurality of stamp images are stored in the storage device 17 as the stamp image data 17a.

For example, the stamp image composing unit 23 refers to a table indicating correspondence relationships between a plurality of the combined image generating conditions and the plurality of stamp images to select the stamp image adapted for the combined image generating condition.

When the copy job is executed, the stamp image composing unit 23 identifies an orientation of the document set on the image reading apparatus 11 as the combined image generating condition, and identifies an orientation (portrait or landscape) of the above-described combined image based on the identified document orientation to select a stamp image adapted for the identified combined image orientation.

When the print job is executed, the stamp image composing unit 23 identifies a printing orientation specified by the driver 2a as the combined image generating condition, and based on the identified printing orientation, an orientation of the above-described combined image is identified to select a stamp image adapted for the identified combined image orientation.

In this embodiment according to the present invention, the above-described plurality of stamp images are stored in a respective plurality of document boxes. The stamp image composing unit 23: (a) selects a document box adapted for the combined image generating condition from the above-described plurality of document boxes; and (b) selects a stamp image stored in the selected document box.

The stamp image registration unit 24 stores an image specified by a user in the above-described document box as a stamp image. For example, the image reading apparatus 11 reads a stamp image from a document on which the stamp image is printed, and the stamp image is stored as image data in a document box that corresponds to a combination of, for example, a raw image size, a raw image orientation, and the number of combinations N of a combined image that are specified by the user. Thus, a stamp can be composed to a user's desired position in the combined image. The stamp image is an image having a size identical to that of the combined image.

Next, a description will be given of a behavior of the above-described image processing apparatus.

### (a) When a copy job is executed.

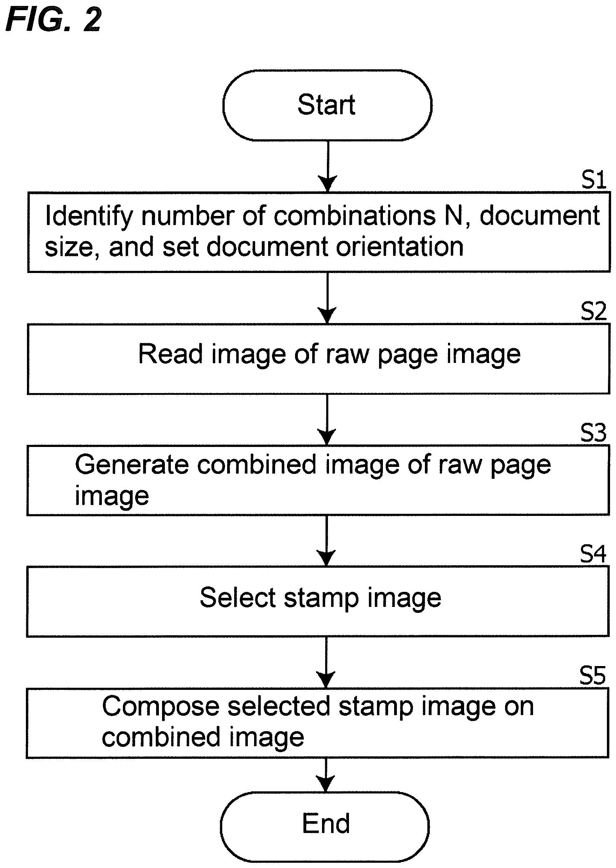

FIG. 2 illustrates a behavior of the image processing apparatus illustrated in FIG. 1 when the copy job is executed.

When the controller 16 accepts a request of a copy job associated with an N-up print, the raw image obtaining unit 21 identifies job settings, such as a document size and the number of combinations N, (that is, combined image generating condition) specified by user's operations, and furthermore, identifies a set document orientation (that is, combined image generating condition) of documents set on the platen glass or the automatic document feeder (Step S1).

Next, the raw image obtaining unit 21 controls the image reading apparatus 11 to cause the image reading apparatus 11 to execute a reading of raw images for a combined image from the documents, and obtains the raw image from the image reading apparatus 11 (Step S2).

The combined image generating unit 22 generates the combined image of the specified number of combinations N from the obtained raw images (Step S3).

Then, the stamp image composing unit 23 selects a stamp image adapted for a combination (that is, combined image generating condition) of, for example, the above-described document size, number of combinations N, and set document orientation (Step S4).

At this time, when the document size is A4, a page orientation setting of the image reading apparatus 11 is top edge on top, and an actually set document orientation (that is, orientation of document sheet) is A4R (that is, vertical direction in which long side is parallel to main-scanning orientation), the orientation of the combined image is determined to be the landscape. In this case, a stamp image stored in a document box #1 is selected.

When the document size is A4, the page orientation setting of the image reading apparatus 11 is top edge on top, and the actually set document orientation is A4E (that is, horizontal direction in which long side is parallel to sub-scanning orientation), the orientation of the combined image is determined to be the portrait. In this case, a stamp image stored in a document box #2 is selected.

When the document size is A4, the page orientation setting of the image reading apparatus 11 is top edge on left, and the actually set document orientation is A4R, the orientation of the combined image is determined to be the portrait. In this case, the stamp image stored in the document box #2 is selected.

When the document size is A4, the page orientation setting of the image reading apparatus 11 is top edge on left, and the actually set document orientation is A4E, the orientation of the combined image is determined to be the landscape. In this case, the stamp image stored in the document box #1 is selected.

When the document size is A3, the page orientation setting of the image reading apparatus 11 is top edge on top, and the actually set document orientation is A3E, the orientation of the combined image is determined to be the landscape. In this case, the stamp image stored in a document box #3 is selected.

When the document size is A3, the page orientation setting of the image reading apparatus 11 is top edge on left, and the actually set document orientation is A3E, the orientation of the combined image is determined to be the portrait. In this case, a stamp image stored in a document box #4 is selected.

Here, while the stamp image is selected regardless of the number of combinations N, a different stamp image may be selected corresponding to the number of combinations N.

After selecting the stamp image, the stamp image composing unit 23 reads the selected stamp image from the storage device 17 to compose the selected stamp image on the combined image (Step S5).

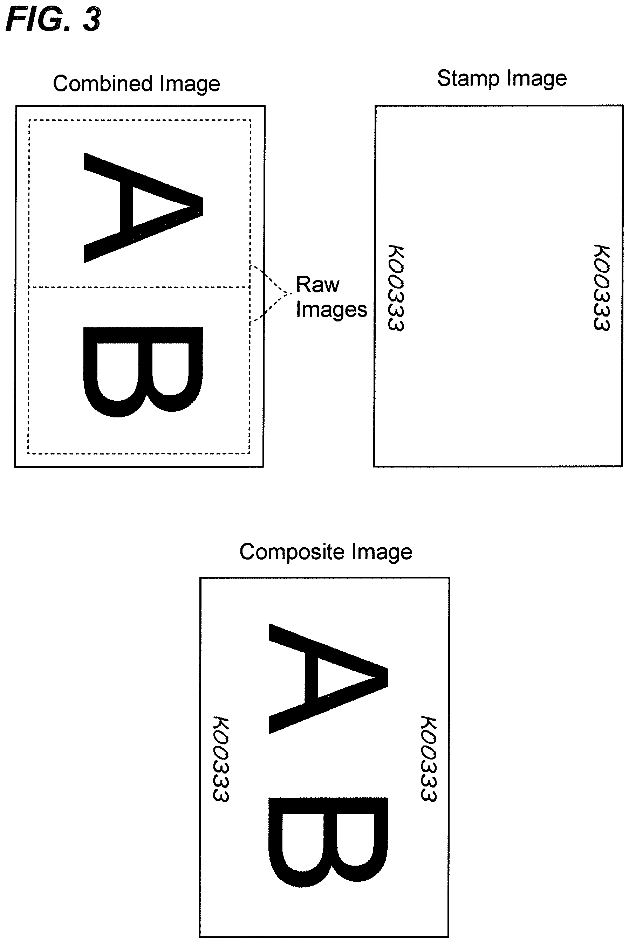

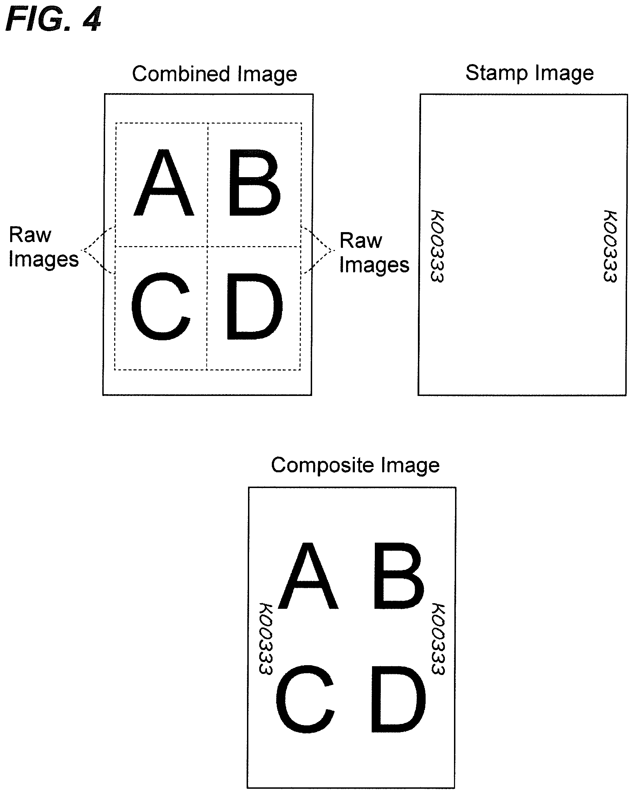

FIG. 3 illustrates one example of a stamp image and a composite image of a combined image and the stamp image when the number of combinations N is two, the document size is A4, and the orientation of the combined image is the landscape. FIG. 4 illustrates one example of a stamp image and a composite image of a combined image and the stamp image when the number of combinations N is four, the document size is A4, and the orientation of the combined image is the landscape.

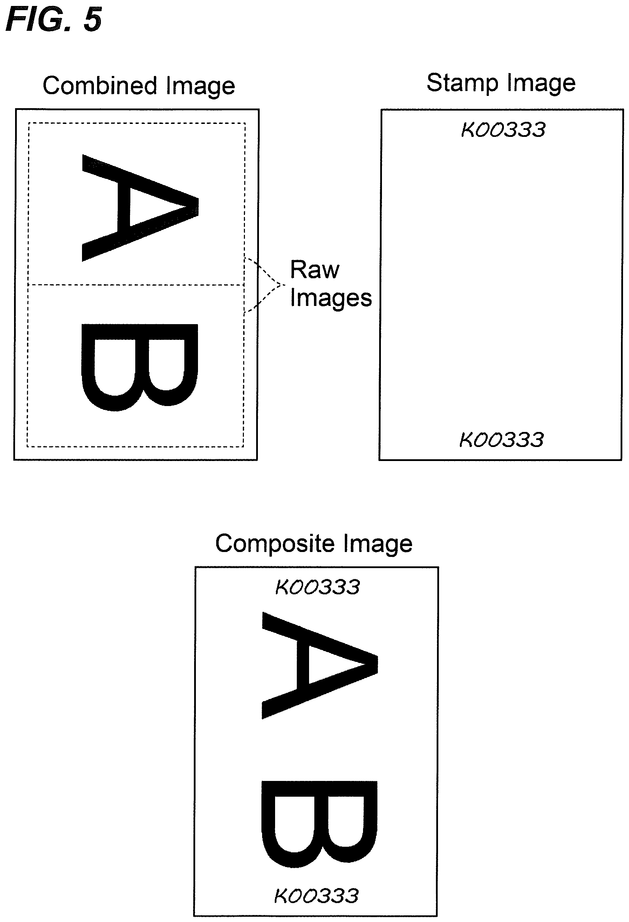

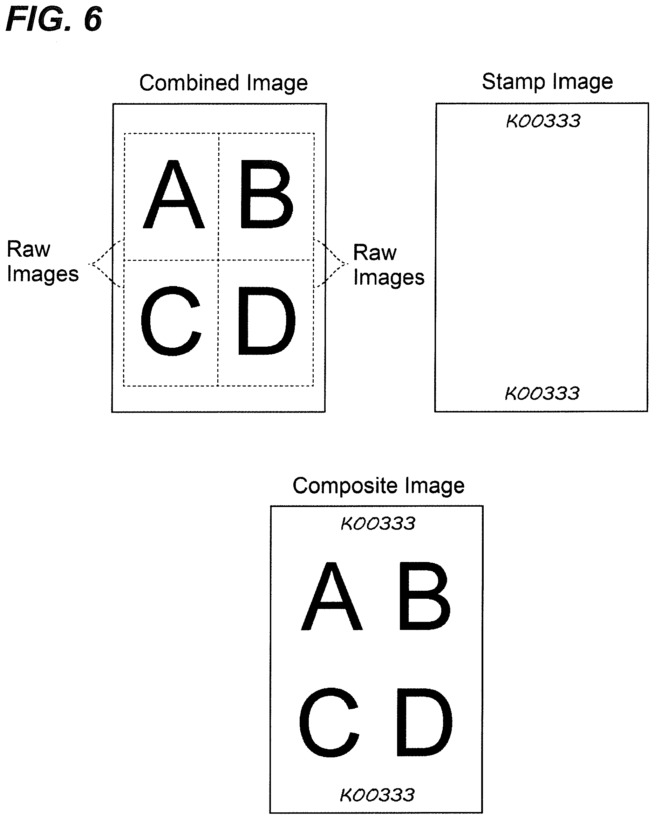

FIG. 5 illustrates one example of a stamp image and a composite image of a combined image and the stamp image when the number of combinations N is two, the document size is A4, and the orientation of the combined image is the portrait. FIG. 6 illustrates one example of a stamp image and a composite image of a combined image and the stamp image when the number of combinations N is four, the document size is A4, and the orientation of the combined image is the portrait.

For example, when: a stamp image like ones illustrated in FIGS. 3 and 4 (stamp image that locates stamps (character string and figure) in margin portions in top side center and lower side center with respect to combined image in landscape orientation) is stored in the document box #1; and a stamp image like ones illustrated in FIGS. 5 and 6 (stamp image that locates stamps (character string and figure) in margin portions in top side center and lower side center with respect to combined image in portrait orientation) is stored in the document box #2, once the orientation of the combined document is determined to be the landscape, the stamp image is composed as illustrated in FIGS. 3 and 4, and once the orientation of the combined document is determined to be the portrait, the stamp image is composed as illustrated in FIGS. 5 and 6.

When the number of combinations is four, the document size is A3, and the orientation of the combined document is the landscape, for example, a stamp image in which four stamps are arranged to correspond to respective centers of the long sides on outer sides of four raw images in the combined image is stored in the document box #3 and used.

The composite image thus generated (that is, combined image on which stamp image is composed) is printed by the print apparatus 12 in the copy job. When a transmitting job is executed, image data of the composite image generated as described above may be transmitted with, for example, the facsimile device 13 (when facsimile transmitting job is executed) or the communication device 14 to an external device (such as the terminal device 2) (when sending job is executed).

### (b) When a print job is executed.

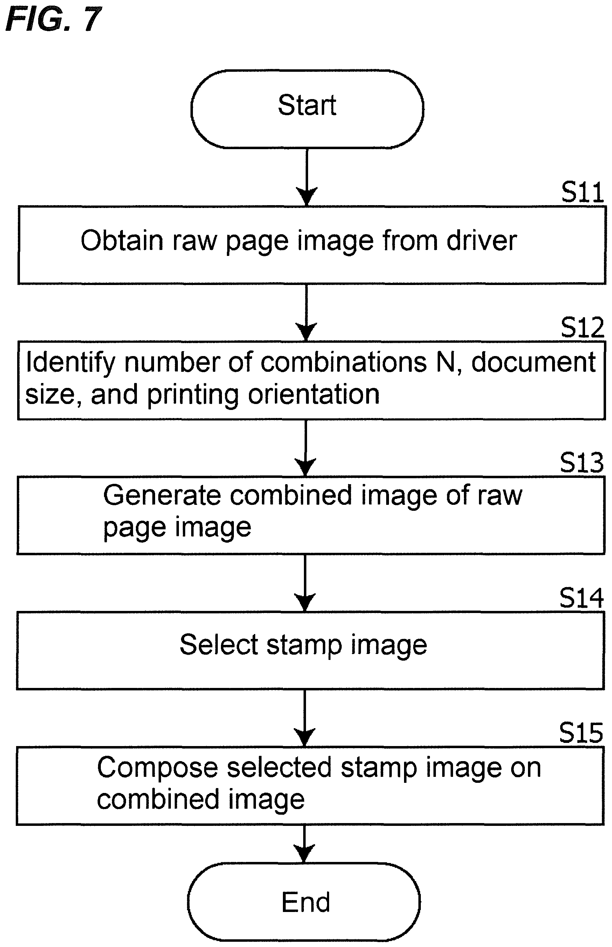

FIG. 7 illustrates a behavior of the image processing apparatus illustrated in FIG. 1 when the print job is executed.

When the controller 16 accepts a request of a print job associated with an N-up print from the driver 2a, the raw image obtaining unit 21 uses the communication device 14 to receive print data transmitted from the driver 2a, and extracts a raw image from the print data or converts the print data into a raw image (Step S11). The raw image obtaining unit 21 identifies, for example, the number of combinations N, the document size, and the printing orientation as a printing condition setting (that is, combined image generating condition) based on the print data (Step S12).

Next, the combined image generating unit 22 generates a combined image of the specified number of combinations N from the obtained raw images (Step S13).

Then, the stamp image composing unit 23 selects a stamp image adapted for a combination (that is, combined image generating condition) of, for example, the above-described document size, number of combinations N, and printing orientation (Step S14).

At this time, when the document size is A4 and the printing orientation is vertical, it is determined that the orientation of the combined image is the portrait. In this case, the stamp image stored in the document box #2 is selected.

When the document size is A4 and the printing orientation is horizontal, it is determined that the orientation of the combined image is the landscape. In this case, the stamp image stored in the document box #1 is selected.

At this time, when the document size is A3 and the printing orientation is vertical, it is determined that the orientation of the combined image is the portrait. In this case, the stamp image stored in the document box #4 is selected.

When the document size is A3 and the printing orientation is horizontal, it is determined that the orientation of the combined image is the landscape. In this case, the stamp image stored in the document box #3 is selected.

Here, while the stamp image of the print job and the stamp image of the copy job are shared and used, a stamp image different from the stamp image of the copy job may be used as the stamp image of the print job.

After selecting a stamp image, the stamp image composing unit 23 reads the selected stamp image from the storage device 17 to compose the selected stamp image on the combined image (Step S15).

The composite image thus generated (that is, combined image on which stamp image is composed) is printed by the print apparatus 12 in the print job. Image data of the composite image generated as described above may be transmitted to the external device (such as the terminal device 2) with, for example, the facsimile device 13 and the communication device 14.

As described above, according to the above-described Example, the raw image obtaining unit 21 obtains N raw images for generating the N-up image. The combined image generating unit 22 generates the combined image from the obtained raw images. The stamp image composing unit 23 selects the stamp image adapted for the combined image generating condition from the plurality of stamp images having the mutually different layouts of stamps to compose the selected stamp image on the combined image.

This locates the stamp at a position corresponding to a generating condition of the N-up image, and thus, the stamp is composed at the appropriate position within the combined image in generating the N-up image.

### Example 2.

In an image processing apparatus according to Example 2, the above-described table that indicates the correspondence relationships between the plurality of combined image generating conditions and the plurality of stamp images can be edited or generated by the user.

In Example 2, when the input apparatus 15b detects a predetermined user's operation, the stamp image registration unit 24: (a) displays options per item of the combined image generating condition on the display apparatus 15a; (b) detects the user's operation that selects one of the options of the item as a set value of the item with the input apparatus 15b; (c) after set values for all the items of the combined image generating condition are selected, identifies this combined image generating condition as the combination of the set values of these items; (d) detects the user's operation that selects a stamp image (specifically, a document box that stores the stamp image) adapted for the combined image generating condition with the input apparatus 15b; and (e) after the stamp image is selected, registers a correspondence relationship between the combined image generating condition and the stamp image in the above-described table.

The above-described table: (a) may be a shared table for, for example, a copy job, a transmitting job (a sending job or a facsimile transmitting job), and a print job; or (b) may be a plurality of different tables for the copy job and the transmitting job, and the print job to be used by selecting the table corresponding to the job type.

For example, when a table is for the copy job and transmitting job, the items include, for example, the document size, the page orientation, the number of combinations, the user (such as user name and user ID) (when user authentication is on), and a department (such as department name and department ID) (when department management is on). Then, the options of the item "document size" include, for example, Ledger, LetterR, Letter, Legal, StatementR, Statement, 11x15, Oficio2, 8K, 16KR, 16K, A3R, A4R, A4, A5R, A5, A6, B4R, B4, B5R, B5, B6R, B6, and Folio. The options of the item "page orientation" include, for example, setting a document upper edge to the back and setting the document upper edge to the left. The options of the item "number of combinations" include, for example, one (that is, no combination), two (that is, 2 in 1), and four (that is, 4 in 1). The options of the item "user" or the item "department" include, for example, a user or a user name of department, and a user ID, or a department name and a department ID registered in advance.

For example, when a table is for the print job, the items include, for example, the document size, the printing orientation, the number of combinations, the user (such as user name and user ID) (when user authentication is on), and the department (such as department name and department ID) (when department management is on). Then, the options of the item "document size" include, for example, Ledger, LetterR, Letter, Legal, StatementR, Statement, 11x15, Oficio2, 8K, 16KR, 16K, A3R, A4R, A4, A5R, A5, A6, B4R, B4, B5R, B5, B6R, B6, and Folio. The options of the item "printing orientation" include, for example, vertical, horizontal, vertical 180 degree rotation, and horizontal 180 degree rotation. The options of the item "number of combinations" include, for example, one (that is, no combination), two (that is, 2 in 1), and four (that is, 4 in 1). The options of the item "user" or the item "department" include, for example, the user or the user name of the department, and the user ID, or the department name and the department ID registered in advance.

Then, when a job is executed, the stamp image composing unit 23 refers to the table to select the stamp image adapted for the combined image generating condition. At this time, when the copy job and the transmitting job have the table different from that of the print job, the stamp image composing unit 23 selects the table corresponding to the job type of the job, and refers to the selected table to select the stamp image adapted for the combined image generating condition.

Other configurations and behaviors of the image processing apparatus according to Example 2 are similar to those of Example 1, and thus, the description is omitted.

As described above, with above-described Example 2, the above-described table (that is, correspondence relationships between combined image generating conditions and stamps image) can be customized by the user.

Various changes and corrections to the above-described Examples are apparent for those skilled in the art

For example, in above-described Examples 1 and 2, the stamp image composing unit 23 may switch the plurality of stamp images corresponding to any one of the user, the user's department, and a time attribute of a day on which the combined image is generated (such as day of week, week, month, and year).

The disclosure is applicable to an image forming apparatus, such as a multi-functional peripheral.

### Exemplary Example of the Disclosure

An image processing apparatus according to claim 1.

### Effects of the Disclosure

The disclosure provides an image processing apparatus that composes a stamp at an appropriate position within a combined image in generating an N-up image.
FIG. 1
   Image Processing Apparatus
   Operation Panel
   Display Apparatus
   Input Apparatus
   Controller
   Image Reading Apparatus
   Raw Image Obtaining Unit
   Print Apparatus
   Combined Image Generating Unit
   Facsimile Device
   Stamp Image Composing Unit
   Storage Device
   Stamp Image Registration Unit
   Stamp Image Data
   Communication Device
   Terminal Device
   Driver
FIG. 2
   Start
   Identify number of combinations N, document size, and set document orientation
   Read image of raw page image
   Generate combined image of raw page image
   Select stamp image
   Compose selected stamp image on combined image
   End
FIG. 3
   Combined Image
   Raw Images
   Stamp Image
   Composite Image
FIG. 4
   Combined Image
   Raw Images
   Raw Images
   Stamp Image
   Composite Image
FIG. 5
   Combined Image
   Raw Images
   Stamp Image
   Composite Image
FIG. 6
   Combined Image
   Raw Images
   Raw Images
   Stamp Image
   Composite Image
FIG. 7
   Start
   Obtain raw page image from driver
   Identify number of combinations N, document size, and printing orientation
   Generate combined image of raw page image
   Select stamp image
   Compose selected stamp image on combined image
   End

## Claims

1. An image processing apparatus (1) comprising:
an image reading apparatus (11) configured to read N raw images from N documents;
a raw image obtaining unit (21) configured to obtain N raw images from the image reading apparatus (11);
a combined image generating unit (22) configured to generate a combined image from the obtained N raw images; and
a stamp image composing unit (23) configured to select a stamp image adapted for a combined image generating condition from a plurality of stamp images having mutually different layouts of stamps to compose the selected stamp image on the combined image, wherein the plurality of stamp images is stored in a respective plurality of document boxes and wherein the selected stamp image has a size identical to that of the combined image,
wherein the stamp image composing unit (23) is configured to: (a) identify an orientation of a first document set on the image reading apparatus (11) as the combined image generating condition; (b) identify an orientation of the combined image based on the identified orientation of the document; and (c) select a stamp image adapted for the orientation of the combined image and to select a document box adapted for the combined image generating condition from the plurality of document boxes; and to select a stamp image stored in the selected document box.

2. The image processing apparatus (1) according to claim 1, further comprising
a stamp image registration (24) unit configured to store an image specified by a user in the selected document box as the stamp image.

3. The image processing apparatus (1) according to claim 2,
wherein the stamp image registration unit (24) is configured to: (a) display options per item of the combined image generating condition on a display apparatus; (b) detect a user's operation that selects one of the options of the item as a set value of the item with an input apparatus; (c) after set values for all the items of the combined image generating condition are selected, identify the combined image generating condition as a combination of the set values of the items; (d) detect a user's operation that selects a stamp image adapted for the combined image generating condition with the input apparatus; and (e) after the stamp image is selected, register a correspondence relationship between the combined image generating condition and the stamp image in a table, and
the stamp image composing unit (23) is configured to refer to the table to select the stamp image adapted for the combined image generating condition.

4. The image processing apparatus (1) according to claim 3,
wherein the stamp image registration unit (24) is configured to register correspondence relationships between the combined image generating conditions and the stamps image in the table corresponding to a respective plurality of job types, and
the stamp image composing unit (23) is configured to refer to the table selected corresponding to a job type of a job to be executed to select the stamp image adapted for the combined image generating condition.

## Patentansprüche

1. Bildverarbeitungsgerät (1), umfassend:
eine Bildlesevorrichtung (11), die zum Lesen von N Rohbildern aus N Dokumenten konfiguriert ist;
eine Rohbild-Erfassungseinheit (21), die so konfiguriert ist, dass sie N Rohbilder von der Bildlesevorrichtung (11) erfasst;
eine Kombinationsbilderzeugungseinheit (22), die so konfiguriert ist, dass sie ein kombiniertes Bild aus den erhaltenen N Rohbildern erzeugt; und
eine Stempelbild-Zusammensetzungseinheit (23), die konfiguriert ist, um ein Stempelbild, das für eine kombinierte Bilderzeugungsbedingung angepasst ist, aus einer Vielzahl von Stempelbildern auszuwählen, die gegenseitig unterschiedliche Layouts von Stempeln haben, um das ausgewählte Stempelbild auf dem kombinierten Bild zusammenzusetzen, wobei die Vielzahl von Stempelbildern in einer jeweiligen Vielzahl von Dokumentenboxen gespeichert ist und wobei das ausgewählte Stempelbild eine Größe hat, die identisch zu der des kombinierten Bildes ist,
wobei die Stempelbild-Zusammensetzungseinheit (23) konfiguriert ist, um: (a) eine Ausrichtung eines ersten Dokuments, das auf die Bildlesevorrichtung (11) gelegt ist, als die Bedingung für die Erzeugung eines kombinierten Bildes zu identifizieren; (b) eine Ausrichtung des kombinierten Bildes auf der Grundlage der identifizierten Ausrichtung des Dokuments zu identifizieren; und (c) ein Stempelbild, das für die Ausrichtung des kombinierten Bildes geeignet ist, auszuwählen und eine Dokumentenbox, die für die Bedingung für die Erzeugung des kombinierten Bildes geeignet ist, aus der Vielzahl von Dokumentenboxen auszuwählen; und ein Stempelbild auszuwählen, das in der ausgewählten Dokumentenbox gespeichert ist.

2. Das Bildverarbeitungsgerät (1) nach Anspruch 1, ferner eine Stempelbild-Registrierungseinheit (24) umfassend, die so konfiguriert ist, dass sie ein von einem Benutzer in der ausgewählten Dokumentenbox spezifiziertes Bild als das Stempelbild speichert.

3. Das Bildverarbeitungsgerät (1) nach Anspruch 2,
wobei die Stempelbild-Registrierungseinheit (24) konfiguriert ist, um: (a) Optionen pro Element der kombinierten Bilderzeugungsbedingung auf einer Anzeigevorrichtung anzuzeigen; (b) eine Benutzeroperation, die eine der Optionen des Elements als einen eingestellten Wert des Elements mit einer Eingabevorrichtung auswählt zu erfassen; (c) die kombinierte Bilderzeugungsbedingung als eine Kombination der eingestellten Werte der Elemente, nachdem eingestellte Werte für alle Elemente der kombinierten Bilderzeugungsbedingung ausgewählt wurden zu identifizieren; (d) eine Benutzeroperation, die ein für die kombinierte Bilderzeugungsbedingung geeignetes Stempelbild mit der Eingabevorrichtung auswählt zu erfassen; und (e) nachdem das Stempelbild ausgewählt ist, eine Korrespondenzbeziehung zwischen der kombinierten Bilderzeugungsbedingung und dem Stempelbild in einer Tabelle zu registrieren, und
die Stempelbild-Zusammensetzungseinheit (23) so konfiguriert ist, dass sie auf die Tabelle Bezug nimmt, um das für die kombinierte Bilderzeugungsbedingung geeignete Stempelbild auszuwählen.

4. Das Bildverarbeitungsgerät (1) nach Anspruch 3,
wobei die Stempelbild-Registrierungseinheit (24) konfiguriert ist, um Korrespondenzbeziehungen zwischen den kombinierten Bilderzeugungsbedingungen und dem Stempelbild in der Tabelle zu registrieren, die einer jeweiligen Vielzahl von Auftragsarten entspricht, und
die Stempelbild-Zusammensetzungseinheit (23) so konfiguriert ist, dass sie sich auf die Tabelle bezieht, die entsprechend einem Auftragstyp eines auszuführenden Auftrags ausgewählt wurde, um das Stempelbild auszuwählen, das für die kombinierte Bilderzeugungsbedingung geeignet ist.

## Revendications

1. Appareil de traitement d'images (1), comprenant :
un appareil de lecture d'images (11) configuré pour lire N images brutes dans N documents ;
une unité d'obtention d'images brutes (21) configurée pour obtenir N images brutes auprès de l'appareil de lecture d'images (11) ;
une unité de génération d'image combinée (22) configurée pour générer une image combinée à partir des N images brutes obtenues ; et
une unité de composition d'image de marques (23) configurée pour sélectionner une image de marques adaptée à une condition de génération d'image combinée parmi une pluralité d'images de marques présentant des dispositions de marques mutuellement différentes pour composer l'image de marques sélectionnée sur l'image combinée, la pluralité d'images de marques étant stockée dans une pluralité respective de boîtes à documents et l'image de marques sélectionnée présentant une taille identique à celle de l'image combinée,
l'unité de composition d'image de marques (23) étant configurée pour : (a) identifier une orientation d'un premier document placé sur l'appareil de lecture d'images (11) comme la condition de génération d'image combinée ; (b) identifier une orientation de l'image combinée sur la base de l'orientation identifiée du document ; et (c) sélectionner une image de marques adaptée à l'orientation de l'image combinée et sélectionner une boîte à documents adaptée à la condition de génération d'image combinée parmi la pluralité de boîtes à documents ; et sélectionner une image de marques stockée dans la boîte à documents sélectionnée.

2. Appareil de traitement d'images (1) selon la revendication 1, comprenant en outre :
une unité d'enregistrement d'image de marques (24) configurée pour stocker une image stipulée par un utilisateur dans la boîte à documents sélectionnée comme l'image de marques.

3. Appareil de traitement d'images (1) selon la revendication 2,
l'unité d'enregistrement d'image de marques (24) étant configurée pour : (a) afficher des options pour chaque élément de la condition de génération d'image combinée sur un appareil d'affichage ; (b) détecter une action d'un utilisateur qui sélectionne l'une des options de l'élément comme une valeur définie de l'élément au moyen d'un appareil d'entrée ; (c) une fois que des valeurs définies pour tous les éléments de la condition de génération d'image combinée ont été sélectionnées, identifier la condition de génération d'image combinée comme une combinaison des valeurs définies des éléments ; (d) détecter une action de l'utilisateur qui sélectionne une image de marques adaptée à la condition de génération d'image combinée au moyen de l'appareil d'entrée ; et (e) une fois que l'image de marques a été sélectionnée, enregistrer dans une table une relation de correspondance entre la condition de génération d'image combinée et l'image de marques, et
l'unité de composition d'image de marques (23) étant configurée pour se reporter à la table pour sélectionner l'image de marques adaptée à la condition de génération d'image combinée.

4. Appareil de traitement d'images (1) selon la revendication 3,
l'unité d'enregistrement d'image de marques (24) étant configurée pour enregistrer dans la table des relations de correspondance entre les conditions de génération d'image combinée et l'image de marques correspondant à une pluralité respective de types de tâche, et
l'unité de composition d'image de marques (23) étant configurée pour se reporter à la table sélectionnée correspondant à un type de tâche d'une tâche à exécuter pour sélectionner l'image de marques adaptée à la condition de génération d'image combinée.
